# EUROPEAN PATENT SPECIFICATION

(11) **EP 3 854 690 B1**
(45) Date of publication and mention of the grant of the patent: **03.05.2023**
(21) Application number: 21153584.4
(22) Date of filing: 26.01.2021
(51) Int. Cl.: B64D 15/12, B64D 15/14

(54) **MULTI-LAYERED ICE DETECTOR APPARATUS**
MEHRSCHICHTIGE EISDETEKTORVORRICHTUNG
APPAREIL DE DÉTECTION DE GLACE MULTICOUCHE

(30) Priority: 24.01.2020 IN 202011003303; 29.05.2020 US 202016887186
(43) Date of publication of application: 28.07.2021
(73) Proprietor: Goodrich Corporation, Charlotte, NC 28217-4578 (US)
(72) Inventor: ZADELL, Alex, Willoughby, OH 44094 (US); BOTURA, Galdemir Cezar, Akron, OH 44313 (US); SELVARAJ, Sugumaran, 560067 Bangalore, Karnataka (IN); RIDOUANE, El Hassan, Rochestown, Co. Cork (IE); DEBBADI, Karthik, Cork, T23 K19X (IE)
(74) Representative: Dehns

(56) References cited:
- EP-A1- 3 763 622
- GB-A- 2 509 729
- US-A1- 2012 061 482
- US-B1- 6 227 492

## Description

### CROSS-REFERENCE TO RELATED APPLICATIONS

This application claims priority to and the benefit of Indian Provisional Patent Application No. 202011003303 filed on January 24, 2020 entitled "MULTI-LAYERED ICE DETECTOR APPARATUS."

### FIELD

The present disclosure relates to ice detection systems and methods, and more specifically to a multi-layered ice detector apparatus, system, and method for detecting and distinguishing different icing conditions.

### BACKGROUND

Icing on aircraft and other vehicles, structures, and systems, is a hazardous safety concern. For example, governmental agencies, such as the Federal Aviation Administration ("FAA") in the United States of America and the European Aviation Safety Agency ("EASA") in Europe, often establish rules and safety requirements that relate to icing on aircraft. Continuing the example, the FAA issues rules pertaining to icing conditions on aircraft, referred to conventionally as "appendix C icing conditions" (see FAA CFR 14 Part 25). The FAA has recently issued heightened rules, at least for certain types of aircraft, pertaining to conditions in which specific water content and altitudes in the atmosphere result in the formation of "supercooled large droplets (SLD)." These conditions, which are not covered by appendix C icing conditions, are referred to as appendix O icing conditions. Conventional ice detection and/or de-icing systems and methods are unable to differentiate the appendix C icing conditions from the appendix O icing conditions, and thus aircraft may have insufficient de-icing protocols to handle appendix O icing conditions, thus resulting in potential safety concerns. Document GB2509729 discloses an apparatus and method for detecting the presence of water or ice on the surface of a wing of an aircraft comprising a plurality of separate heaters. Document US 6227492 discloses a redundant ice management system for an aircraft comprising electrical heating systems.

### SUMMARY

In various embodiments, the present disclosure provides a multi-layered ice detector apparatus. The multi-layered ice detector apparatus may include a first heater strip configured to be mounted to a surface, the first heater strip forming a first heater layer of the multi-layered ice detector apparatus. The multi-layered ice detector apparatus may further include a second heater strip coupled in proximity to the first heater strip, the second heater strip forming a second heater layer of the multi-layered ice detector apparatus. Still further, the multi-layered ice detector apparatus may include a plurality of temperature sensors coupled to at least one of the first heater strip and the second heater strip, wherein the plurality of temperature sensors are configured to detect a temperature profile of the multi-layered ice detector apparatus, wherein the temperature profile is indicative of an extent of icing.

According to various embodiments, the multi-layered ice detector apparatus further includes an electrically insulative layer disposed between the first heater layer and the second heater layer. The electrically insulative layer may be thermally conductive. The multi-layered ice detector apparatus further includes a third heater strip coupled in proximity to the second heater strip, the third heater strip forming a third heater layer of the multi-layered ice detector apparatus, according to various embodiments. The electrically insulative layer may be a first electrically insulative layer, and the multi-layered ice detector apparatus may further include a second electrically insulative layer disposed between the second heater layer and the third heater layer.

In various embodiments, the temperature profile comprises a spatial temperature map of the heater strip. The plurality of temperature sensors is a first plurality of temperature sensors coupled to the first heater layer, the multi-layered ice detector apparatus further comprising a second plurality of temperature sensors coupled to the second heater layer, wherein the spatial temperature map comprises a temperature depth parameter, according to various embodiments.

The surface may be an external surface of an aircraft, and the temperature profile may be indicative of whether the aircraft is operating in an appendix C icing-envelope or an appendix O icing-envelope. The surface is a leading edge of a structure of an aircraft, wherein the first heater layer and the second heater layer are configured to extend around the leading edge, according to various embodiments. The second heater strip may be a higher-powered heater strip than the first heater strip. The second heater strip may be configured to be positioned closer the surface than the first heater strip in response to the multi-layered ice detector being mounted to the surface, and correspondingly the first heater strip may be configured to be positioned closer to ambient air than the second heater strip.

Also disclosed herein, according to various embodiments, is an aircraft comprising a first heater strip, a second heater strip, a plurality of temperature sensors, and a controller. The first heater strip forms a first heater layer of a multi-layered ice detector apparatus, according to various embodiments. The second heater strip, which is coupled in proximity to the first heater strip, forms a second heater layer of the multi-layered ice detector apparatus, the multi-layered ice detector apparatus mounted to leading edge surface of the aircraft, according to various embodiments. The plurality of temperature sensors are coupled to at least one of the first heater strip and the second heater strip, wherein the plurality of temperature sensors are configured to detect a temperature profile of the multi-layered ice detector apparatus, according to various embodiments. The controller can be structured to monitor/control a single sensor or a plurality of sensors in different locations of the aircraft.

The controller may be operably coupled in electronic communication with the multi-layered ice detector apparatus, and the controller may have a processor. A tangible, non-transitory memory is configured to communicate with the processor, wherein the tangible, non-transitory memory has instructions stored thereon that, in response to execution by the processor, cause the aircraft to perform various operations, according to various embodiments. These various operations may include determining, by the controller and based on the temperature profile, an icing condition of the aircraft. Further, these various operations may include selectively actuating, by the controller, individual heater layers of the multi-layered ice detector apparatus.

Determining the icing condition of the aircraft comprises determining whether the aircraft is in an appendix C icing-envelope or an appendix O icing-envelope, according to various embodiments. The second heater strip may be positioned closer to a skin of the leading edge surface of the aircraft than the first heater strip, and correspondingly the first heater strip may be positioned closer to ambient air than the second heater strip.

Also disclosed herein, according to various embodiments, is an ice detection method of an aircraft. The method may include receiving, by a controller, a temperature profile from a plurality of temperature sensors coupled to at least one of a first heater strip and a second heater strip that collectively form a multi-layered ice detector apparatus mounted to an external surface of the aircraft. Further, the method may include determining, by the controller and based on the temperature profile, an icing condition of the aircraft. Still further, the method may include selectively actuating, by the controller and based on the icing condition, individual heater layers of the multi-layered ice detector apparatus. Determining the icing condition of the aircraft may include determining, by the controller, a heat flux of the multi-layered ice detector apparatus.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 illustrates an exemplary aircraft, in accordance with various embodiments;
FIG. 2 illustrates an ice detector apparatus mounted to a structure, in accordance with various embodiments;
FIGS. 3A and 3B are cross-sectional views of multi-layered ice detector apparatuses, in accordance with various embodiments;
FIG. 3C illustrates various structures of heater strips of an ice detector apparatus, in accordance with various embodiments;
FIG. 4 is a schematic block diagram of an ice detection system (e.g., of an aircraft), in accordance with various embodiments; and
FIG. 5 is a schematic flow chart diagram of an ice detection method, in accordance with various embodiments.

The subject matter of the present disclosure is particularly pointed out and distinctly claimed in the concluding portion of the specification. A more complete understanding of the present disclosure, however, may best be obtained by referring to the detailed description and claims when considered in connection with the drawing figures.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein without departing from the scope of the disclosure Thus, the detailed description herein is presented for purposes of illustration only and not of limitation.

Disclosed herein, according to various embodiments, are apparatuses, systems, and methods for ice detection. More specifically, the present disclosure provides apparatuses, systems, and methods for detecting icing conditions and for facilitating distinguishing between different icing conditions. The present disclosure also provides a multi-layered ice detector apparatus comprising multiple heater layers that are configured to be selectively activated. The selective actuation of the multiple heater layers provides customized/tailored heating for ice detection, thereby improving the efficiency of the system and/or increasing the accuracy of the ice detection system, according to various embodiments. Though numerous examples and details herein pertain to implementing the disclosed ice detection apparatus and system in conjunction with an aircraft (e.g., for improving flight safety by distinguishing between different icing conditions during flight), the ice detection apparatus, system, and method may be implemented with other structures and systems, such as other vehicles, buildings, bridges, wind turbines, power cables, etc.

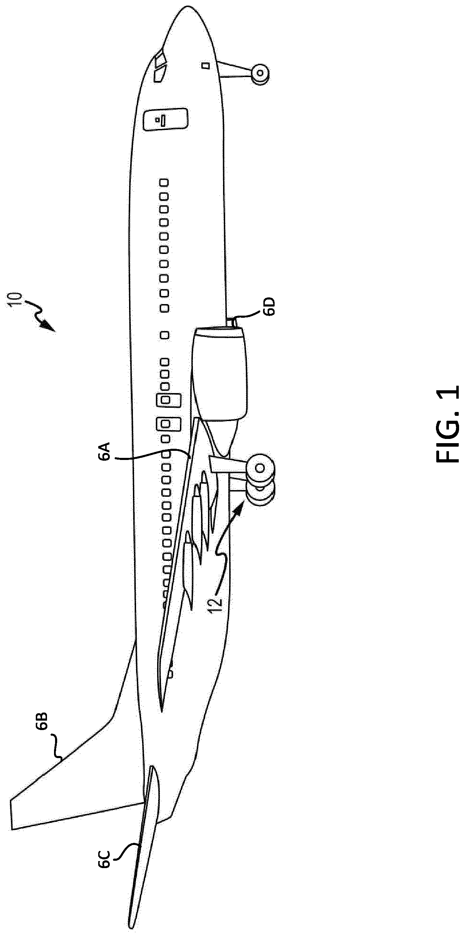

Referring to FIG. 1, in accordance with various embodiments, an aircraft 10 is illustrated. The aircraft 10 may include a fuselage and various landing gear 12. Further, the aircraft 10 may include various structures that have a leading edge (i.e., a forward edge). For example, the aircraft 10 generally includes wings having a leading edge 6A, a tail/vertical stabilizer having a leading edge 6B, a horizontal stabilizer having a leading edge 6C, and/or an engine case inlet having a leading edge 6D, among others. As described in greater detail below, the ice detector apparatus provided herein is mounted to an external surface of the aircraft 10, and may be specifically mounted to a leading edge of the aircraft 10, according to various embodiments. In various embodiments, the ice detector comprises a strip on the suction side of the airfoil. In various embodiments, the ice detector is mounted around the leading edge and extends to the pressure side of the airfoil to compensate aircraft side slip. In various embodiments, the ice detector apparatus may be mounted to an internal surface.

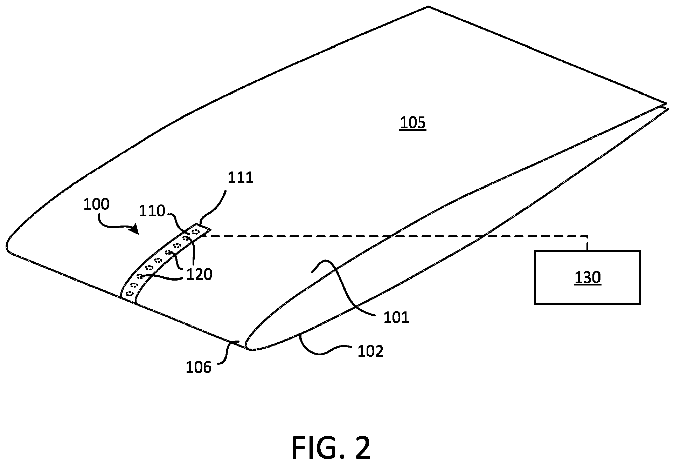

In various embodiments, and with reference to FIG. 2, an ice detector apparatus 100 includes a heater strip 110 and a temperature sensor 120. The heater strip 110 is generally configured to be mounted to an external surface 105 of an aircraft (e.g., to a structure of aircraft 10), according to various embodiments. The temperature sensor 120, which may be a plurality of temperature sensors 120, is coupled to the heater strip 110, according to various embodiments. Generally, the temperature sensor 120 is configured to detect a temperature profile of the heater strip 110, and the temperature profile is indicative of an icing condition of the aircraft, according to various embodiments. That is, the temperature profile detected by the one or more temperature sensors 120 may be indicative of the extent or degree of icing the aircraft is experiencing. For example, the determined temperature profile may be utilized, as described in greater detail below, to differentiate between different icing regimes and thus to determine whether the aircraft is operating in an appendix C icing-envelope or an appendix O icing-envelope. The appendix O icing-envelope refers to flight operating conditions that include the formation of "super large droplets" and/or that comprise air having an elevated water content that is susceptible to freezing on the aircraft.

In various embodiments, the ice detector apparatus 100 is thus able to differentiate between different icing conditions (in addition to merely detecting the presence of ice). Said differently, a controller 130 may include a processor configured to perform one or more algorithms to differentiate icing conditions. By distinguishing different icing conditions, the controller 130 of the aircraft is configured to indicate to a pilot or automatically undertake actions to address the dynamic icing conditions of the aircraft. For example, and as described in greater detail below with reference to the FIGS., in response to determining the flight operating condition of the aircraft is in the appendix O icing-envelope, the trajectory of the aircraft may be changed to remove the aircraft from the appendix O icing-envelope and/or supplementary de-icing systems, methods, and protocols may be implemented to address the elevated icing conditions.

With continued reference to FIG. 2, controller 130 may be operably coupled in electronic communication with the heater strip 110 and the temperature sensors 120. The controller 130 may be integrated into computer systems onboard aircraft such as, for example, a full authority digital engine control (FADEC), an engine-indicating and crew-alerting system (EICAS), and/or the like. The controller 130 may also be a standalone computer system separate from aircraft and in electronic communication with aircraft, as described in further detail herein. The controller 130 may include one or more processors and/or one or more tangible, non-transitory memories and be capable of implementing logic. Each processor can be a general purpose processor, a digital signal processor (DSP), an application specific integrated circuit (ASIC), a field programmable gate array (FPGA) or other programmable logic device, discrete gate or transistor logic, discrete hardware components, or any combination thereof.

In various embodiments, the processor of the controller 130 may be configured to implement various logical operations in response to execution of instructions, for example, instructions stored on the non-transitory memory (e.g., tangible, computer-readable medium). As used herein, the term "non-transitory" is to be understood to remove only propagating transitory signals per se from the claim scope and does not relinquish rights to all standard computer-readable media that are not only propagating transitory signals per se.

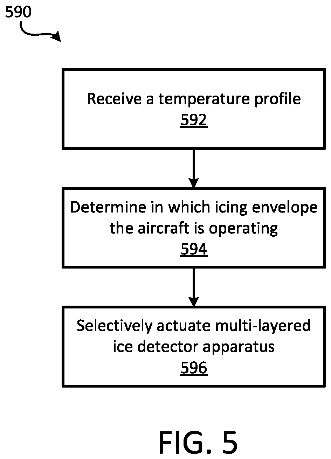

The controller 130 may be configured to perform various operations. For example, the method steps described below with reference to FIG. 5 may be performed by the controller 130. Generally, the controller 130 is configured to receive the temperature profile from the temperature sensors 120 and to determine the icing condition of the aircraft (e.g., to determine whether a flight operating condition of the aircraft is in an appendix C icing-envelope or an appendix O icing-envelope).

In various embodiments, and with continued reference to FIG. 2, the heater strip 110 comprises a carbon allotrope heater or metallic heater. For example, the heater strip 110 may include a carbon nanotube heater. Carbon allotropes, such as carbon nanotubes (CNT), or metal materials may be well-suited for the heater strip 110 because carbon materials may withstand the temperatures involved, may conform to the geometry of the external surface 105 of the aircraft to which the heater strip 110 is to be mounted, and may have low thermal inertia (i.e., fast response time). In various embodiments, an electrically insulative and/or a thermally insulative material is disposed between the heater strip 110 and the surface 105 of the aircraft. In various embodiments, the heater element is a "running wet" or "totally evaporative" anti-icing heater (or a hybrid of both), depending on the severity of icing conditions.

In various embodiments, the ice detector apparatus 100 includes a plurality of temperature sensors 120 coupled to and disposed along a length of the heater strip 110. As used in this context only, the term "coupled to" may refer to standalone, separate temperature sensors that are operably connected to the heater strip to sense/detect temperatures of the heater strip 110 along its length, or the term "coupled to" may refer to temperature sensors that are integrated into the heater strip 110. In various embodiments, the temperature sensors 120 are resistance thermometers (e.g., resistance temperature detectors) and/or fiber optical temperature sensors. The temperature sensors 120 are generally configured to sense a temperature profile, as a function of distance along/across the heater strip 110. That is, the detected temperature profile may be a spatial temperature map of the heater strip 110.

In various embodiments, and with continued reference to FIG. 2, the ice detector apparatus 100 may be mounted to a leading edge 106 of a structure of the aircraft 10. For example, and with reference to FIG. 1, the ice detector apparatus 100 may be mounted to leading edge 6A of the wings, the leading edge 6B of the tail/vertical stabilizer, the leading edge 6C of the horizontal stabilizer, and/or the leading edge 6D of the engine case inlet, among others. That is, the heater strip 110 may extend around the leading edge 106 of an aircraft structure such that a first end 111 of the heater strip 110 is disposed on a first side 101 of the aircraft structure and a second end (not visible in FIG. 2) of the heater strip 110 is disposed on a second side 102 of the aircraft structure. The first side 101 may be opposite the second side 102 such that the first side 101 and the second side 102 meet at the leading edge 106. By positioning the heater strip 110 in this manner, the extent of impingement of water/ice from the leading edge along the first and second sides 101, 102 of the aircraft structure can be determined using the plurality of temperature sensors 120. That is, the temperature profile (e.g., the spatial temperature map) of the heater strip 110 provides information pertaining to how far back from the leading edge 106 the water/ice reaches, thereby indicating the icing condition of the aircraft.

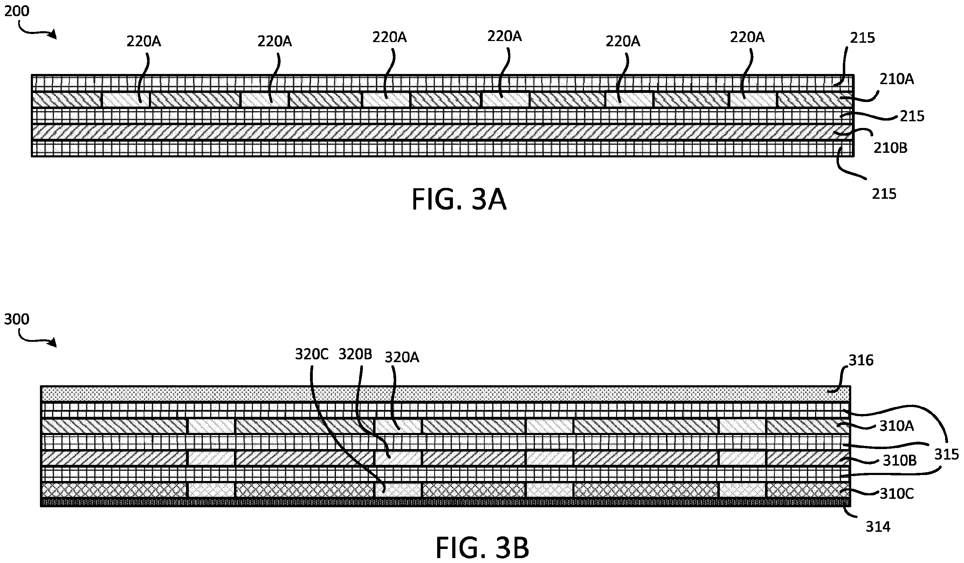

In accordance with the claims, the ice detector apparatus 100 is a multi-layered ice detector apparatus 200, such as the one shown in cross-section in FIG. 3A. That is, multi-layered ice detector apparatus 200 includes multiple heater strips that form multiple heater layers 210A, 210B. The multiple heater layers, which include a first heater layer 210A and a second heater layer 210B, may be individually controlled (e.g., by a controller), thus enabling the multi-layered ice detector apparatus to provide customized/tailored heating. For example, only a single heater layer, such as first heater layer 210A, may be warranted during certain flight conditions of the aircraft, and additional heater layers, such as the second heater layer 210B, may be selectively activated as additional heating is warranted. Additional details pertaining to the activation of the multiple heater layers are provided below.

In accordance with the claims, the multi-layered ice detector apparatus 200 also includes a plurality of temperature sensors coupled to the first heater strip/layer and/or the second heater strip/layer. For example, the multi-layered ice detector apparatus 200 may include a first plurality of temperature sensors 220A coupled to and distributed along the first heater layer 210A. The plurality of temperature sensors 220A, as described above, are configured to detect a temperature profile (e.g., a spatial temperature map) of the multi-layered ice detector apparatus.

In various embodiments, and with continued reference to FIG.3A, the multi-layered ice detector apparatus 200 further includes an electrically insulative layer 215 disposed between the first heater layer 210A and the second heater layer 210B. The electrically insulative layer 215 may facilitate electrical separation between the two heater strips, thus enabling the two heater strips to be controlled/activated separately. In various embodiments, the electrically insulative layer 215 is configured to be thermally conductive. That is, the electrically insulative layer 215 may facilitate thermal conduction between the layers in order to facilitate heat transfer for purposes of ice detection while maintaining electrical separation between the layers. In various embodiments, the first heater layer 210A is arranged so as to be parallel to the second heater layer 210B. In various embodiments, the multi-layered ice detector apparatus 200 includes additional electrically insulative layers 215, thus forming an alternating structure of heater strips and electrically insulative layers.

In various embodiments, and with reference to FIG. 3B, the multi-layered ice detector apparatus 300 includes a third heater strip forming a third heater layer 310C. Accordingly, the multi-layered ice detector apparatus 300 may include a first heater layer 310A, a second heater layer 31 0B, and a third heater layer 310C. These heater layers 310A, 31 0B, 310C may be separated from each other by electrically insulative layers 315. The multi-layered ice detector apparatus 300 may further include a bond layer 314 to facilitate mounting the multi-layered ice detector apparatus 300 to a surface of the aircraft, such a leading edge surface of the aircraft. The bond layer 314, according to various embodiments, may be electrically insulative. In various embodiments, the multi-layered ice detector apparatus 300 further includes an erosion protection layer 316 as an exterior-most layer of the apparatus. The erosion protection layer 316 may be coupled directly to one of the electrically insulative layers 315.

In various embodiments, each of the heater layers 310A, 310B, 310C may have its own set of temperature sensors 320A, 320B, 320C. That is, instead of only the top/exterior most heater layer having temperature sensors (e.g., FIG. 3A), the first heater layer 310A may have a first plurality of temperature sensors 320A coupled thereto, the second heater layer 310B may have a second plurality of temperature sensors 320B coupled thereto, and the third heater layer 310C may have a third plurality of temperature sensors 320C coupled thereto. In such embodiments, spatial temperature map detected by the multiple pluralities of temperature sensors may comprise a temperature 'depth' parameter. That is, the detected temperature profile may not be merely a mapping of the temperatures along the surface of the apparatus, but may also include the temperatures detected at each of the heater layer levels, thus providing additional feedback that may be utilized by the controller to determine the heat flux at any given location across the surface of the aircraft, thus improving the accuracy and reliability of ice detection, according to various embodiments.

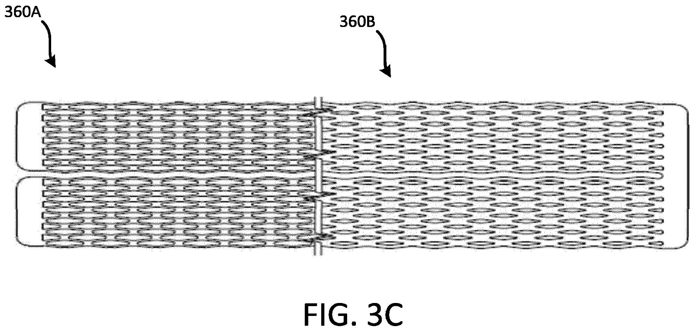

In accordance with the claims, the multiple heater layers have different heat ratings. That is, the heater layers may be configured to provide different heating performance. In various embodiments, and with reference to FIG. 3C, heater strips forming the heater layers may be made from bands/ribbons of material, and the type and thickness of these bands/ribbons may affect the electrical resistance and correspondingly the thermal performance of the heater layers. For example, a first heater strip may have structure 360A and a second heater strip may have structure 360B. The comparatively wider features of structure 360B may provide for increased heating when compared with structure 360A. Accordingly, not only can the heaters be individually activated to provide heat when needed, but the individual heaters may not be all the same. That is, some of the heater layers may have a higher heat generation rating (e.g., may be "higher-powered") than others. This facilitates improved heating control and enhances the ability of the controller to achieve a specific heating performance. In accordance with the claims, and returning to reference FIG. 3B, the second heater layer 310B is positioned closer to the aircraft surface than the first heater layer 310A, and the second heater layer 310B is higher-powered than the first heater layer 310A. Accordingly, the outer, exterior-most heater layer 310A may be the lowest powered heater and may be activated in response to no or minimal ice. As the operating condition of the aircraft moves further into the icing envelopes, the second heater layer 310B may be activated to provide the additional heating required to handle the augmented icing conditions. Further, because the second heater layer 310B has a higher heating performance than the first heater layer 310A, the staged progression of increasing heat may be accomplished by deactivating the first heater layer 310A and activating only the second heater layer 310B (which is more powerful than the first). This approach enables further customization of the heat provided, as different groupings of heater layers may be selectively activated to provide desired heat generation.

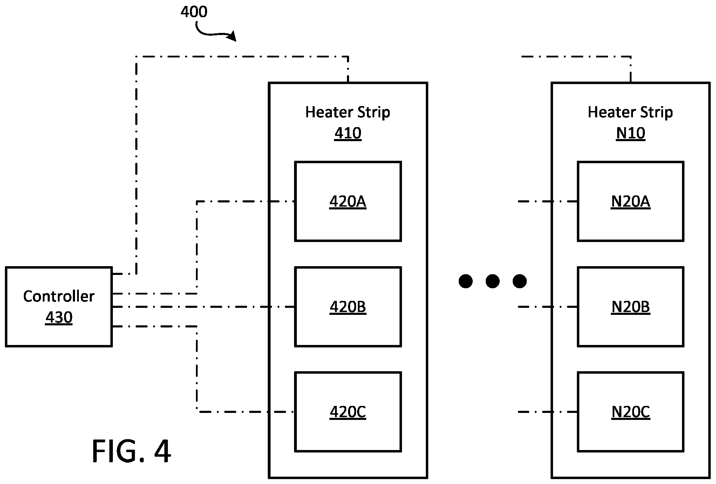

In various embodiments, and with reference to FIG. 4, controller 430 is provided in electronic communication with a multi-layered ice detector apparatus 400 having multiple heater strips forming multiple heater layers. That is, the controller 430 may be configured to receive detected temperatures from multiple temperature sensors 420A from each heater strip 410. The ice detector apparatus 400 may have "N" heater strips, and each of these heaters strips (N10) may have a corresponding number of temperature sensors (N20A, N20B, N20C, etc.).

In various embodiments, and with reference to FIG. 5, an ice detection method 500 may include receiving, by a controller, a temperature profile from a temperature sensor coupled to a heater strip mounted to a surface of the aircraft at step 592. The method 500 may further include determining an icing condition at step 594. Step 594 may include determining, by the controller and based on the temperature profile, whether the aircraft is in dry air, or whether a flight operating condition of the aircraft is in an appendix C icing-envelope or an appendix O icing-envelope. 20.

Determining the icing condition of the aircraft may include determining, by the controller, a heat flux of the multi-layered ice detector apparatus. The method 500 may further include changing the flight operating condition (based on the determined icing condition). That is, the method may include, in response to determining the flight operating condition of the aircraft is experiencing an icing condition, changing, by the controller, the flight operating condition to remove the aircraft from the icing-envelope.

Alternatively or additionally, method 500 may include selectively actuating a multi-layered ice detector apparatus at step 596 (based on the determined icing condition from step 594). For example, step 596 may include, in response to determining the flight operating condition of the aircraft is in the appendix O icing-envelope, actuating one or more layers of heater strips of the multi-layered ice detector apparatus in order to properly manage the increased icing conditions present while the aircraft is in the appendix O icing-envelope.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure.

The scope of the disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one and that reference to an item in the singular may also include the item in the plural. All ranges and ratio limits disclosed herein may be combined.

Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C. Different cross-hatching is used throughout the figures to denote different parts but not necessarily to denote the same or different materials.

The steps recited in any of the method or process descriptions may be executed in any order and are not necessarily limited to the order presented. Furthermore, any reference to singular includes plural embodiments, and any reference to more than one component or step may include a singular embodiment or step. Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

Any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts or areas but not necessarily to denote the same or different materials. In some cases, reference coordinates may be specific to each figure.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. After reading the description, it will be apparent to one skilled in the relevant art(s) how to implement the disclosure in alternative embodiments.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A multi-layered ice detector apparatus comprising:
a first heater strip configured to be mounted to an external surface of an aircraft, the first heater strip forming a first heater layer of the multi-layered ice detector apparatus;
a second heater strip coupled in proximity to the first heater strip, the second heater strip forming a second heater layer of the multi-layered ice detector apparatus;
a plurality of temperature sensors (12) coupled to at least one of the first heater strip and the second heater strip, wherein the plurality of temperature sensors are configured to detect a temperature profile of the multi-layered ice detector apparatus, wherein the temperature profile is indicative of an extent of icing, wherein the second heater strip has a higher heat generation rating than the first heater strip, and wherein the second heater strip is configured to be positioned closer to the external surface than the first heater strip in response to the multi-layered ice detector being mounted to the external surface.

2. The multi-layered ice detector apparatus of claim 1, further comprising an electrically insulative layer disposed between the first heater layer and the second heater layer.

3. The multi-layered ice detector apparatus of claim 2, wherein the electrically insulative layer is thermally conductive.

4. The multi-layered ice detector apparatus of claim 2, further comprising a third heater strip coupled in proximity to the second heater strip, the third heater strip forming a third heater layer of the multi-layered ice detector apparatus.

5. The multi-layered ice detector apparatus of claim 4 wherein the electrically insulative layer is a first electrically insulative layer, the multi-layered ice detector apparatus further comprising a second electrically insulative layer disposed between the second heater layer and the third heater layer.

6. The multi-layered ice detector apparatus of any preceding claim, wherein the temperature profile comprises a spatial temperature map of the multi-layered ice detector apparatus.

7. The multi-layered ice detector apparatus of claim 6, wherein the plurality of temperature sensors is a first plurality of temperature sensors coupled to the first heater layer, the multi-layered ice detector apparatus further comprising a second plurality of temperature sensors coupled to the second heater layer, wherein the spatial temperature map comprises a temperature depth parameter.

8. The multi-layered ice detector apparatus of any preceding claim, wherein the external surface is a leading edge of a structure of the aircraft, wherein the first heater layer and the second heater layer are configured to extend around the leading edge.

9. The multi-layered ice detector apparatus of any preceding claim, wherein the first heater strip is configured to be positioned closer to ambient air than the second heater strip in response to the multi-layered ice detector being mounted to the surface.

10. An aircraft comprising:
the multi-layered ice detector apparatus of any preceding claim mounted to a leading edge of the aircraft, the surface including the leading edge and the second heater layer being located closer to the surface than the first heater layer; and
a controller operably coupled in electronic communication with the multi-layered ice detector apparatus, the controller comprising a processor, wherein a tangible, non-transitory memory is configured to communicate with the processor, wherein the tangible, non-transitory memory has instructions stored thereon that, in response to execution by the processor, cause the aircraft to perform operations comprising:
determining, by the controller and based on the temperature profile, an icing condition of the aircraft; and
selectively actuating, by the controller, individual heater layers of the multi-layered ice detector apparatus.

11. The aircraft of claim 10, further comprising an electrically insulative layer disposed between the first heater layer and the second heater layer.

12. The aircraft of claim 11, wherein the electrically insulative layer is thermally conductive.

13. The aircraft of claim 10, 11 or 12, wherein the temperature profile is a spatial temperature map, wherein the plurality of temperature sensors is a first plurality of temperature sensors coupled to the first heater layer, the multi-layered ice detector apparatus further comprising a second plurality of temperature sensors coupled to the second heater layer, wherein the spatial temperature map comprises a temperature depth parameter.

14. An ice detection method of an aircraft, the method comprising:
receiving, by a controller, a temperature profile from a plurality of temperature sensors coupled to at least one of a first heater strip and a second heater strip that collectively form a multi-layered ice detector apparatus mounted to an external surface of the aircraft;
determining, by the controller and based on the temperature profile, an icing condition of the aircraft; and
selectively actuating, by the controller and based on the icing condition, individual heater layers of the multi-layered ice detector apparatus, the second heater strip having a higher heat generation rating than the first heater strip, and wherein the second heater strip is configured to be positioned closer to the external surface than the first heater strip in response to the multi-layered ice detector being mounted to the surface.

15. The method of claim 14, wherein determining the icing condition of the aircraft comprises determining, by the controller, a heat flux of the multi-layered ice detector apparatus.

## Patentansprüche

1. Mehrschichtige Eisdetektorvorrichtung, umfassend:
einen ersten Heizstreifen, der dazu konfiguriert ist, an einer äußeren Oberfläche eines Luftfahrzeugs angebracht zu sein, wobei der erste Heizstreifen eine erste Heizschicht der mehrschichtigen Eisdetektorvorrichtung bildet;
einen zweiten Heizstreifen, der in der Nähe des ersten Heizstreifens gekoppelt ist, wobei der zweite Heizstreifen eine zweite Heizschicht der mehrschichtigen Eisdetektorvorrichtung bildet;
eine Vielzahl von Temperatursensoren (12), die an mindestens einen von dem ersten Heizstreifen und dem zweiten Heizstreifen gekoppelt ist, wobei die Vielzahl von Temperatursensoren dazu konfiguriert ist, ein Temperaturprofil der mehrschichtigen Eisdetektorvorrichtung zu erfassen, wobei das Temperaturprofil ein Ausmaß der Vereisung angibt, wobei der zweite Heizstreifen eine höhere Wärmeerzeugungsleistung als der erste Heizstreifen aufweist und wobei der zweite Heizstreifen dazu konfiguriert ist, als Reaktion darauf, dass der mehrschichtiger Eisdetektor an der äußeren Oberfläche angebracht ist, näher an der äußeren Oberfläche positioniert zu sein als der erste Heizstreifen.

2. Mehrschichtige Eisdetektorvorrichtung nach Anspruch 1, ferner umfassend eine elektrisch isolierende Schicht, die zwischen der ersten Heizschicht und der zweiten Heizschicht angeordnet ist.

3. Mehrschichtige Eisdetektorvorrichtung nach Anspruch 2, wobei die elektrisch isolierende Schicht wärmeleitend ist.

4. Mehrschichtige Eisdetektorvorrichtung nach Anspruch 2, ferner umfassend einen dritten Heizstreifen, der in der Nähe des zweiten Heizstreifens gekoppelt ist, wobei der dritte Heizstreifen eine dritte Heizschicht der mehrschichtigen Eisdetektorvorrichtung bildet.

5. Mehrschichtige Eisdetektorvorrichtung nach Anspruch 4, wobei die elektrisch isolierende Schicht eine erste elektrisch isolierende Schicht ist, wobei die mehrschichtige Eisdetektorvorrichtung ferner eine zweite elektrisch isolierende Schicht umfasst, die zwischen der zweiten Heizschicht und der dritten Heizschicht angeordnet ist.

6. Mehrschichtige Eisdetektorvorrichtung nach einem der vorhergehenden Ansprüche, wobei das Temperaturprofil eine räumliche Temperaturkarte der mehrschichtigen Eisdetektorvorrichtung umfasst.

7. Mehrschichtige Eisdetektorvorrichtung nach Anspruch 6, wobei die Vielzahl von Temperatursensoren eine erste Vielzahl von Temperatursensoren ist, die an die ersten Heizschicht gekoppelt ist, wobei die mehrschichtige Eisdetektorvorrichtung ferner eine zweite Vielzahl von Temperatursensoren umfasst, die an die zweite Heizschicht gekoppelt ist, wobei die räumliche Temperaturkarte einen Temperaturtiefenparameter umfasst.

8. Mehrschichtige Eisdetektorvorrichtung nach einem der vorhergehenden Ansprüche, wobei die äußere Oberfläche eine Vorderkante einer Struktur des Luftfahrzeugs ist, wobei die erste Heizschicht und die zweite Heizschicht dazu konfiguriert sind, sich um die Vorderkante herum zu erstrecken.

9. Mehrschichtige Eisdetektorvorrichtung nach einem der vorhergehenden Ansprüche, wobei der erste Heizstreifen dazu konfiguriert ist, als Reaktion darauf, dass der mehrschichtige Eisdetektor an der Oberfläche angebracht ist, näher an der Umgebungsluft positioniert zu sein als der zweite Heizstreifen.

10. Luftfahrzeug, umfassend:
die mehrschichtige Eisdetektorvorrichtung nach einem der vorhergehenden Ansprüche, die an einer Vorderkante des Luftfahrzeugs angebracht ist, wobei die Oberfläche die Vorderkante beinhaltet und die zweite Heizschicht näher an der Oberfläche angeordnet ist als die erste Heizschicht; und
eine Steuereinrichtung, die betriebstechnisch in elektronischer Kommunikationsverbindung an die mehrschichtige Eisdetektorvorrichtung gekoppelt ist, wobei die Steuereinrichtung einen Prozessor umfasst, wobei ein materieller, nicht flüchtiger Speicher dazu konfiguriert ist, mit dem Prozessor zu kommunizieren, wobei der materielle, nicht flüchtige Speicher Anweisungen aufweist, die darin gespeichert sind und die als Reaktion auf eine Ausführung durch den Prozessor das Luftfahrzeug veranlassen, Vorgänge durchzuführen, die Folgendes umfassen:
Bestimmen eines Vereisungszustands des Luftfahrzeugs durch die Steuereinrichtung und basierend auf dem Temperaturprofil; und
selektives Betätigen einzelner Heizschichten der mehrschichtigen Eisdetektorvorrichtung durch die Steuereinrichtung.

11. Luftfahrzeug nach Anspruch 10, ferner umfassend eine elektrisch isolierende Schicht, die zwischen der ersten Heizschicht und der zweiten Heizschicht angeordnet ist.

12. Luftfahrzeug nach Anspruch 11, wobei die elektrisch isolierende Schicht wärmeleitend ist.

13. Luftfahrzeug nach Anspruch 10, 11 oder 12, wobei das Temperaturprofil eine räumliche Temperaturkarte ist, wobei die Vielzahl von Temperatursensoren eine erste Vielzahl von Temperatursensoren ist, die an die ersten Heizschicht gekoppelt ist, wobei die mehrschichtige Eisdetektorvorrichtung ferner eine zweite Vielzahl von Temperatursensoren umfasst, die an die zweite Heizschicht gekoppelt ist, wobei die räumliche Temperaturkarte einen Temperaturtiefenparameter umfasst.

14. Eisdetektionsverfahren eines Luftfahrzeugs, wobei das Verfahren Folgendes umfasst:
Empfangen eines Temperaturprofils durch eine Steuereinrichtung von einer Vielzahl von Temperatursensoren, die an mindestens einen von einem ersten Heizstreifen und einem zweiten Heizstreifen gekoppelt ist, die zusammen eine mehrschichtige Eisdetektorvorrichtung bilden, die an einer äußeren Oberfläche des Luftfahrzeugs angebracht ist;
Bestimmen eines Vereisungszustands des Luftfahrzeugs durch die Steuereinrichtung und basierend auf dem Temperaturprofil; und selektives Betätigen einzelner Heizschichten der mehrschichtigen Eisdetektorvorrichtung durch die Steuereinrichtung und basierend auf dem Vereisungszustand, wobei der zweite Heizstreifen eine höhere Wärmeerzeugungsleistung als der erste Heizstreifen aufweist und wobei der zweite Heizstreifen dazu konfiguriert ist, als Reaktion darauf, dass der mehrschichtige Eisdetektor an der Oberfläche angebracht ist, näher an der äußeren Oberfläche positioniert zu sein als der erste Heizstreifen.

15. Verfahren nach Anspruch 14, wobei das Bestimmen des Vereisungszustands des Luftfahrzeugs Bestimmen eines Wärmeflusses der mehrschichtigen Eisdetektorvorrichtung durch die Steuereinrichtung umfasst.

## Revendications

1. Appareil de détection de glace multicouche comprenant :
une première bande chauffante configurée pour être montée sur une surface externe d'un aéronef, la première bande chauffante formant une première couche chauffante de l'appareil de détection de glace multicouche ;
une deuxième bande chauffante couplée à proximité de la première bande chauffante, la deuxième bande chauffante formant une deuxième couche chauffante de l'appareil de détection de glace multicouche ;
une pluralité de capteurs de température (12) couplés à au moins l'une de la première bande chauffante et de la deuxième bande chauffante, dans lequel la pluralité de capteurs de température est configurée pour détecter un profil de température de l'appareil de détection de glace multicouche, dans lequel le profil de température est indicatif d'un niveau de givrage, dans lequel la deuxième bande chauffante a un taux de génération de chaleur supérieur à celui de la première bande chauffante, et dans lequel la deuxième bande chauffante est configurée pour être positionnée plus près de la surface externe que la première bande chauffante en réponse au fait que le détecteur de glace multicouche soit monté sur la surface externe.

2. Appareil de détection de glace multicouche selon la revendication 1, comprenant en outre une couche électriquement isolante disposée entre la première couche chauffante et la deuxième couche chauffante.

3. Appareil de détection de glace multicouche selon la revendication 2, dans lequel la couche électriquement isolante est thermiquement conductrice.

4. Appareil de détection de glace multicouche selon la revendication 2, comprenant en outre une troisième bande chauffante couplée à proximité de la deuxième bande chauffante, la troisième bande chauffante formant une troisième couche chauffante de l'appareil de détection de glace multicouche.

5. Appareil de détection de glace multicouche selon la revendication 4, dans lequel la couche électriquement isolante est une première couche électriquement isolante, l'appareil de détection de glace multicouche comprenant en outre une seconde couche électriquement isolante disposée entre la deuxième couche chauffante et la troisième couche chauffante.

6. Appareil de détection de glace multicouche selon une quelconque revendication précédente, dans lequel le profil de température comprend une carte de température spatiale de l'appareil de détection de glace multicouche.

7. Appareil de détection de glace multicouche selon la revendication 6, dans lequel la pluralité de capteurs de température est une première pluralité de capteurs de température couplée à la première couche chauffante, l'appareil de détection de glace multicouche comprenant en outre une seconde pluralité de capteurs de température couplés à la deuxième couche chauffante, dans lequel la carte de température spatiale comprend un paramètre de profondeur de température.

8. Appareil de détection de glace multicouche selon une quelconque revendication précédente, dans lequel la surface externe est un bord d'attaque d'une structure de l'aéronef, dans lequel la première couche chauffante et la deuxième couche chauffante sont configurées pour s'étendre autour du bord d'attaque.

9. Appareil de détection de glace multicouche selon une quelconque revendication précédente, dans lequel la première bande chauffante est configurée pour être positionnée plus près de l'air ambiant que la deuxième bande chauffante en réponse au fait que le détecteur de glace multicouche soit monté sur la surface.

10. Aéronef, comprenant :
l'appareil de détection de glace multicouche selon une quelconque revendication précédente monté sur un bord d'attaque de l'aéronef, la surface comportant le bord d'attaque et la deuxième couche chauffante étant située plus près de la surface que la première couche chauffante ; et
un dispositif de commande couplé de manière fonctionnelle en communication électronique avec l'appareil de détection de glace multicouche, le dispositif de commande comprenant un processeur, dans lequel une mémoire tangible non transitoire est configurée pour communiquer avec le processeur, dans lequel la mémoire tangible non transitoire a des instructions stockées sur celle-ci qui, en réponse à l'exécution par le processeur, amènent l'aéronef à réaliser des opérations comprenant :
la détermination, par le dispositif de commande et sur la base du profil de température, d'une condition de givrage de l'aéronef ; et
l'actionnement sélectif, par le dispositif de commande, de couches chauffantes individuelles de l'appareil de détection de glace multicouche.

11. Aéronef selon la revendication 10, comprenant en outre une couche électriquement isolante disposée entre la première couche chauffante et la deuxième couche chauffante.

12. Aéronef selon la revendication 11, dans lequel la couche électriquement isolante est thermiquement conductrice.

13. Aéronef selon la revendication 10, 11 ou 12, dans lequel le profil de température est une carte de température spatiale, dans lequel la pluralité de capteurs de température est une première pluralité de capteurs de température couplée à la première couche chauffante, l'appareil de détection de glace multicouche comprenant en outre une seconde pluralité de capteurs de température couplée à la deuxième couche chauffante, dans lequel la carte de température spatiale comprend un paramètre de profondeur de température.

14. Procédé de détection de glace d'un aéronef, le procédé comprenant :
la réception, par un dispositif de commande, d'un profil de température provenant d'une pluralité de capteurs de température couplée à au moins l'un parmi une première bande chauffante et une deuxième bande chauffante qui forment collectivement un appareil de détection de glace multicouche monté sur une surface externe de l'aéronef ;
la détermination, par le dispositif de commande et sur la base du profil de température, d'une condition de givrage de l'aéronef ; et
l'actionnement sélectif, par le dispositif de commande et sur la base de la condition de givrage, de couches chauffantes individuelles de l'appareil de détection de glace multicouche, la deuxième bande chauffante ayant un taux de génération de chaleur supérieur à celui de la première bande chauffante, et dans lequel la deuxième bande chauffante est configurée pour être positionné plus près de la surface externe que la première bande chauffante en réponse au fait que le détecteur de glace multicouche soit monté sur la surface.

15. Procédé selon la revendication 14, dans lequel la détermination de la condition de givrage de l'aéronef comprend la détermination, par le dispositif de commande, d'un flux de chaleur de l'appareil de détection de glace multicouche.
